# EUROPÄISCHE PATENTSCHRIFT

(11) **EP 0 657 578 B1**
(45) Veröffentlichungstag und Bekanntmachung des Hinweises auf die Patenterteilung: **26.08.1998**
(21) Anmeldenummer: 94810702.4
(22) Anmeldetag: 06.12.1994
(51) Int. Cl.: D21C 5/02

(54) **Verfahren zur Aufbereitung von Altpapier für die Papierproduktion**
Process of treating waste paper for paper manufacture
Procédé de traitement de vieux papiers pour fabriquer du papier

(30) Priorität: 07.12.1993 CH 3644/93
(43) Veröffentlichungstag der Anmeldung: 14.06.1995
(73) Patentinhaber: Papierfabrik Utzenstorf AG, 3427 Utzenstorf (CH); Dr. W. Kolb AG, 8908 Hedingen (CH)
(72) Erfinder: Schmid, Harald, CH-3427 Utzenstorf (CH); Wankmüller, Siegfried, CH-3427 Utzenstorf (CH); Dale-Kolb, Esther, CH-8142 Uitikon-Waldegg (CH); Schwinger, Klaus, Dr., D-92242 Hirschau (DE)
(74) Vertreter: Hug Interlizenz AG

(56) Entgegenhaltungen:
- WO-A-93/21376
- DE-B- 2 339 591
- DE-B- 2 816 148

## Beschreibung

### TECHNISCHES GEBIET

Die vorliegende Erfindung bezieht sich auf das Gebiet der Papierherstellung. Sie betrifft ein Verfahren zur Aufbereitung von Altpapier für die Papierproduktion, bei welchem Verfahren in einem ersten Schritt Altpapier, welches im wesentlichen aus Haushaltssammelware bzw. aus den Sorten A bis D der Liste der Deutschen Standardsorten (nach VDP) besteht, unter Zugabe von Deinking-Chemikalien aufgelöst und die Druckfarbe abgelöst und dispergiert wird, und in einem zweiten Schritt die Druckfarbenpartikel mittels Flotation aus der Altpapierstoff-Suspension entfernt werden.

Ein solches Verfahren ist aus dem Stand der Technik bekannt (Siehe z.B. WO 93/21367).

### STAND DER TECHNIK

Bei der Aufbereitung von Altpapier für die Papierproduktion haben sich unterschiedliche Verfahren, insbesondere zum Entfernen der Druckfarbe ("Deinking") bewährt. Die Auswahl des jeweiligen Verfahrens richtet sich beispielsweise nach der Qualität des zur Verfügung stehenden Altpapiers. Um in diesem Zusammenhang eine einheitliche Bewertung zu ermöglichen, wird Altpapier in unterschiedliche Sorten eingeteilt. Eine mögliche Einteilung ist die vom Verband der Deutschen Papierindustrie (VDP) aufgestellte Liste der Deutschen Standardsorten, die eine Unterteilung in 5 Sortengruppen (untere, mittlere, bessere, krafthaltige und Sondersorten) vorsieht. Bei den unteren Sorten der ersten Gruppe, die mit den Buchstaben A-D gekennzeichnet sind, finden sich vor allem diejenigen Altpapiere, die auch als Haushaltssammelware bezeichnet werden.

Die Haushaltssammelware (Sorte B10 oder A00), die beispielsweise zu 70 % aus Zeitungen und zu 30 % aus Illustrierten besteht, wird üblicherweise mit einem Flotations-Deinking-Verfahren in "alkalischer Fahrweise" (pH-Wert > 10)aufbereitet. Bei diesem Verfahren wird das Altpapier zunächst in einem Pulper oder einer Auflösetrommel (bei Stoffdichten im Bereich von 4 - 18 %) unter Zugabe von Deinking-Chemikalien aufgelöst. Zur Ablösung und Dispergierung der Druckfarbe helfen dabei als Deinking-Chemikalien Natronlauge und Fettsäuren bzw. Seifen. Zusätzlich wird Wasserstoffperoxid zugegeben, um die Vergilbung des holzhaltigen Faseranteils durch das alkalische Milieu zu vermindern. Zur Stabilisierung des Wasserstoffperoxids werden zusätzlich Wasserglas und Komplexbildner eingesetzt. Die abgelösten und dispergierten Druckfarbenpartikel werden nach mehreren zwischengeschalteten Reinigungsund Sortierschritten anschliessend durch Flotation, d.h. durch Ankopplung an Luftblasen, ausgetragen.

Die alkalische Fahrweise beim Flotations-Deinking-Verfahren hat neben unbestreitbaren Vorteilen wie einem hohen Weissgrad jedoch erhebliche Nachteile:
- es werden grosse Mengen von Chemikalien benötigt, die hohe Kosten und eine starke Belastung des Kreislaufwassers und des Abwassers verursachen
- da zur Kompensation der alkali-bedingten Vergilbung gleichzeitig gebleicht werden muss, lassen sich Deinking und Bleichen im Verfahren nicht voneinander trennen und damit auch nicht getrennt optimieren
- der gesamte Deinking-Prozess hängt stark von der im Prozesskreislauf vorhandenen Ca²⁺-Konzentration ab
- Störstoffe werden bereits während der Auflösung soweit zerkleinert, dass sie später nur schwer ausgeschieden werden können
- während der Aufbereitung im alkalischen Milieu werden klebende Substanzen (Etiketten- und Kuvertkleber etc.) gelöst, aus denen später nach eventuellen Fällungsreaktionen Stickies gebildet werden, die den Aufbereitungs- bzw. Papierproduktionsprozess stören können.
- durch die alkalische Faserstoffaufbereitung wird die Festigkeit der Einzelfaser stark geschwächt.

Andererseits ist man bei besseren Altpapiersorten bereits dazu übergegangen, das Flotations-Deinking-Verfahren anstelle der alkalischen in einer "neutralen", d.h. nicht-alkalischen Fahrweise durchzuführen. Bei der neutralen Fahrweise wird insbesondere auf die Verwendung von Natronlauge als Deinking-Chemikalie verzichtet. Stattdessen werden andere, geringer dosierte Chemikalien eingesetzt, die gleichermassen die Ablösung und Dispersion der Farbteilchen und deren Ankopplung an die Luftbläschen bei der Flotation vermitteln.

Obgleich mit der Aufbereitung im neutralen pH-Bereich hinsichtlich Chemikalienverbrauch und Wasserbelastung wesentliche Vorteile erzielt werden können, ist eine Anwendung dieser Fahrweise bei der Aufbereitung von Haushaltssammelware bisher unterblieben, da man bisher der Auffassung war, dass eine ausreichende Druckfarbenablösung bei überwiegender Haushaltssammelware nur durch eine alkalisch hervorgerufene Faserquellung im Auf- bzw. Ablöseprozess stattfinden kann.

### DARSTELLUNG DER ERFINDUNG

Es ist daher Aufgabe der Erfindung, ein Verfahren zur Aufbereitung von Altpapier, welches im wesentlichen aus Haushaltssammelware besteht, anzugeben, welches einerseits zu einer massgeblichen Reduzierung von Chemikalieneinsatz und Wasserbelastung führt und andererseits einen gute Ablösung der Druckfarbe und damit einen hohen Weissgrad ermöglicht.

Die Aufgabe wird bei einem Verfahren der eingangs genannten Art dadurch gelöst, dass die Auflösung im Pulper im Hochkonsistenzbereich mit einer Feststoffdichte grösser 10 % erfolgt, dass die Auflösung und die Flotation im Neutralbereich mit einem pH-Wert zwischen 6,5 und 8,8 ohne Verwendung von Fettsäuren bzw. Seifen, vorzugsweise auch ohne Verwendung von Wasserstoffperoxid sowie alkalischen Salzen und Lösungen, durchgeführt werden, und dass die Deinking-Chemikalien im wesentlichen aus nichtionogenen Tensiden bestehen.

Durch die Kombination aus Hochkonsistenzauflösung und Verwendung von nichtionogenen Tensiden in einer weitgehend neutralen Umgebung wird eine wirkungsvolle Druckfarbenentfernung bei geringem Chemikalieneinsatz und geringer Wasserbelastung erreicht. Der erhaltene Faserstoff zeichnet sich zudem durch einen höheren Lang-, Mittel- und Kurzfaserstoffanteil und daraus resultierende bessere Entwässerungs- und Festigkeitseigenschaften aus.

Eine erste bevorzugte Ausführungsform des erfindungsgemässen Verfahrens ist dadurch gekennzeichnet, dass die Auflösung im Pulper mit einer Feststoffdichte von etwa 15 % erfolgt, und die Auflösung und Flotation bei einem pH-Wert von 7,8 stattfinden. Durch Wahl dieser Werte werden optimale Deinkingergebnisse erzielt.

Eine zweite bevorzugte Ausführungsform des erfindungsgemässen Verfahrens zeichnet sich dadurch aus, dass nichtionogene Tenside auf der Basis von Alkylalkoxylaten verwendet werden und dass die nichtionogenen Tenside mit einem Anteil von 0,03 bis 0,25 %, vorzugsweise von 0,05 bis 0,1 %, bezogen auf den Stoffeintrag in otro, zugesetzt werden.

Eine dritte bevorzugte Ausführungsform des Verfahrens nach der Erfindung ist dadurch gekennzeichnet, dass die Flotation aufgeteilt ist in eine Vorflotation und eine Nachflotation, und dass vor der Nachflotation zusätzlich weitere Deinking-Chemikalien in Form von nichtionogenen Tensiden zugegeben werden. Hierdurch kann die Effektivität der Nachflotation weiter gesteigert werden.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit den Figuren näher erläutert werden.
Es zeigen
- Fig. 1: in einem Flussdiagramm wesentliche Schritte eines Flotations-Deinking-Verfahrens für die Altpapieraufbereitung, wie es bei der Erfindung zugrundegelegt ist;
- Fig. 2: die Schritte von der Auflösung bis zur Flotation gemäss einem bevorzugten Ausführungsbeispiel der Erfindung;
- Fig. 3: die Unterteilung der Flotation gemäss einem bevorzugten Ausführungsbeispiel der Erfindung; und
- Fig. 4: die Unterteilung der Bleiche gemäss einem bevorzugten Ausführungsbeispiel der Erfindung.

### WEGE ZUR AUSFÜHRUNG DER ERFINDUNG

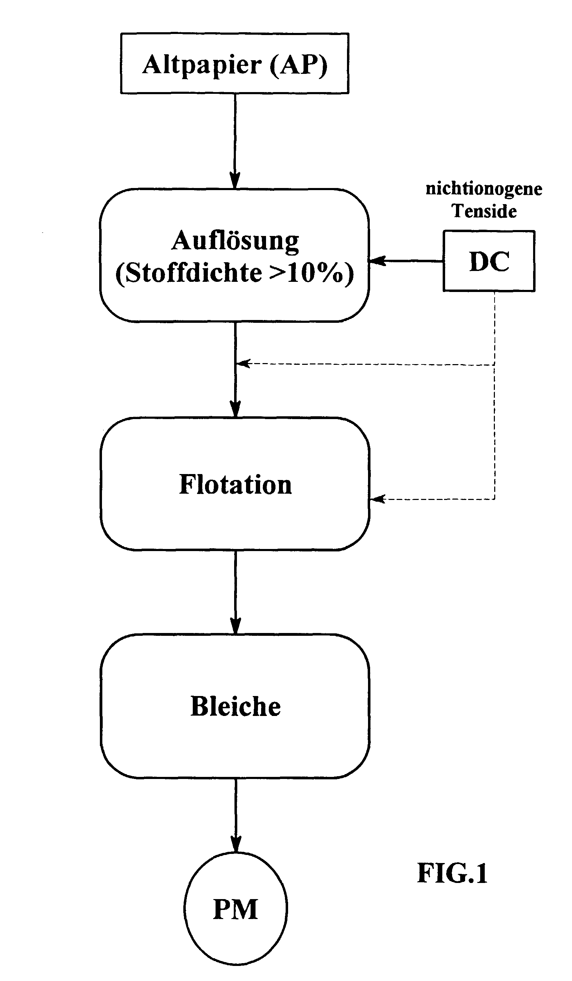

Das der Erfindung zugrundeliegende Verfahren umfasst im wesentlichen die in Fig. 1 dargestellten Hauptschritte der Auflösung des Altpapiers, der Flotation und der anschliessenden Bleiche. Der resultierende Faserstoff kann dann direkt in einer Papiermaschine PM oder anderweitig weiterverarbeitet werden. Bei der Auflösung wird eine wässrige Suspension des Fasermaterials erzeugt. Die Druckfarbe wird von den Fasern abgelöst und in Form von Druckfarbenteilchen dispergiert. Dieser Vorgang wird massgeblich unterstützt durch die mechanische Energie im Auflöse- und Dispergierprozess und durch Deinking-Chemikalien DC, die bei der Auflösung zugegeben werden, aber auch im weiteren Verlauf des Verfahrens vor der Flotation noch zugegeben werden können. Bei der Flotation werden die Druckfarbenteilchen an Blasen geeigneter Grösse angelagert, an die Oberfläche gebracht, und mit dem enstehenden Schaum dort ausgetragen. Hierdurch wird bereits eine wesentliche Erhöhung des Weissgrades erreicht. In der nachfolgenden Bleiche wird der Weissgrad des Fasermaterials durch geeignete Bleichchemikalien wie Wasserstoffperoxid, Formamidinsulfinsäure (FAS) und Natriumhydrosulfit weiter gesteigert.

Massgeblich für die Erfindung ist nun, dass die Auflösung im Hochkonsistenzbereich (HD), z.B. in einem Pulper oder einer Trommel, mit einer Feststoffdichte von grösser 10 % erfolgt, die Auflösung und die Flotation im Neutralbereich mit einem pH-Wert zwischen 6,5 und 8,8 ohne Verwendung von Fettsäuren bzw. Seifen durchgeführt werden, und dass die Deinking-Chemikalien (DC) im wesentlichen aus nichtionogenen Tensiden bestehen. Die intensive mechanische Einwirkung (Faser-Faser-Reibung) bei der Hochkonsistenzauflösung verbessert die Ablösung der Druckfarbenpartikel. Die Aufbereitung im neutralen pH-Bereich vermindert den Chemikalieneinsatz und damit auch die Belastung der Kreislauf- und Abwässer. Der Einsatz von nichtionogenen Tensiden stellt dabei sicher, dass Ablösung, Dispergierung und Ankopplung der Druckfarbenpartikel an die Luftbläschen ohne Beeinflussung durch die Wasserhärte optimal erfolgen.

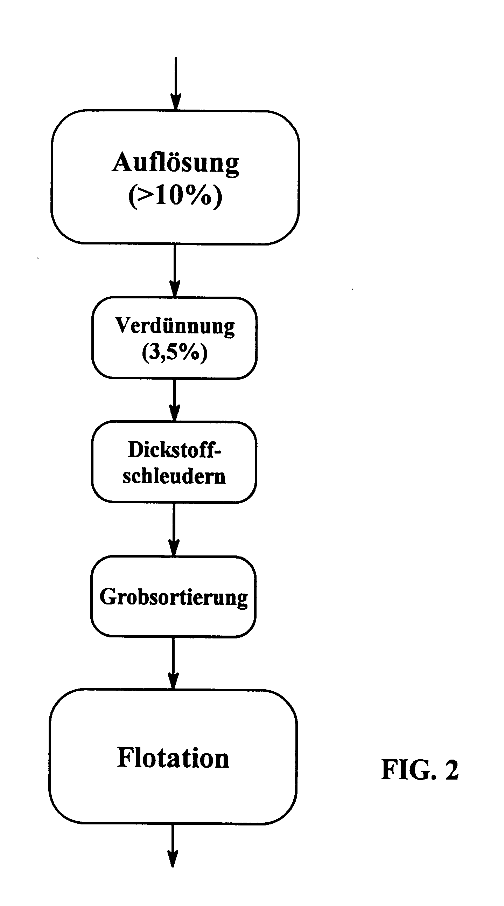

Die in Fig. 1 dargestellten grundlegenden Prozessschritte werden in der Praxis durch weitere Zwischenschritte ergänzt, die nachfolgend im Zusammenhang mit einem Beispiel unter Bezug auf die Figuren 2 bis 4 erläutert werden sollen:

### BEISPIEL

Die in Ballen gepresste Haushaltssammelware (70 % Zeitungen, 30 % Illustrierte) wird in einem Hochkonsistenzpulper bei einer Stoffdichte von 15 % aufgelöst. Als Hochkonsistenzpulper kommt hier z.B. ein Pulper mit schraubenförmigem Rotor in Betracht, wie er von der Firma Lamort unter der Marke "Helico Pulper" auf dem Markt angeboten wird. Denkbar ist aber auch der Einsatz eines Trommel-Pulpers, wie er beispielsweise von der Firma Ahlstrom Machinery angeboten wird. Neben der Auflösung und Suspendierung des Faserverbandes hat dieser Verfahrensschritt die Aufgabe, eine weitgehende Entfernung der Druckfarbe von den Fasern durch mechanische Scherbeanspruchung vorzunehmen. Bei Einsatz eines Helico-Pulpers ist für eine optimale Druckfarbenablösung eine minimale Auflösezeit von 5 min notwendig. Vorzugsweise beträgt die Auflösedauer wenigstens 10 min.

Hierbei wird, im Unterschied zum konventionellen "alkalischen" Deinking-Verfahren, eine "neutrale" Fahrweise angewendet, d.h., sämtliche klassischen Deinking-Chemikalien wie Natronlauge, Wasserglas, Fettsäure, Wasserstoffperoxid und Stabilisatoren werden durch ein Gemisch verschiedener nichtionogener Tenside auf der Basis von Alkylalkoxylaten ersetzt. Als gebrauchsfertige Mischung hat sich ein Produkt bewährt, welches unter dem Handelsnamen "Incopur-RS/GAG" von der Schweizerischen Firma Dr. W. Kolb AG angeboten wird. Zur Auf lösung werden 0,05 Gew.-% Incopur, bezogen auf den Stoffeintrag in otro, verwendet. Falls notwendig, können vor der Nachflotation zusätzlich 0,025 Gew.-% Incopur zugegeben werden.

Um eine gewisse Vorreinigung der Faserstoffsuspension zu ermöglichen, ist der Pulper mit einer als Sortieraggregat arbeitenden Zusatzeinrichtung, der sogenannten Lamort-Birne, ausgestattet. Nicht suspendierbare Verunreinigungen wie Drähte, Schnüre, Folien, Buchrücken etc., die den nachfolgenden Aufbereitungsprozess stören würden, werden durch die Lamort-Birne während der Pulperentleerung aus der Faserstoffsuspension diskontinuierlich entfernt. Während der Faserstoff im Prozess weitergeleitet wird, werden die im Sortieraggregat verbleibenden Fremdstoffe nach einer Waschphase über einen Kompaktor ausgetragen und entsorgt.

Von entscheidender Bedeutung für die Sauberkeit des Fertigstoffes ist - nach einer Verdünnung - die anschliessende Grobsortierung im mittleren Stoffdichtebereich von 3,5 %. Es ist wichtig, zum frühestmöglichen Zeitpunkt mit einer hochwirksamen Grobsortierung zu beginnen, weil damit der wirkungsvollste Beitrag zur Reduzierung von Fremdstoffen (z.B. Stickies) geleistet wird. Dazu wird der Altpapierstoff, nachdem eine Schwerschmutzschleuder (Dickstoffschleuder) den Schwerschmutz abgetrennt hat, durch eine Drucksortierung (Grobsortierung) gereinigt (Fig. 2).

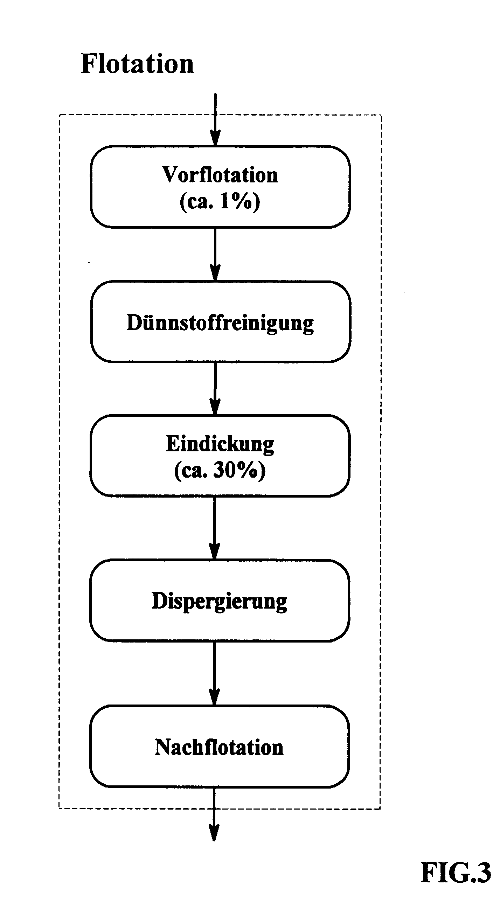

Die Flotation ist in eine Vorflotation und eine Nachflotation unterteilt, zwischen denen mehrere Reinigungsschritte durchgeführt werden (Fig. 3). In der Vorflotation werden in zwei nachfolgenden in Serie geschalteten Flotationszellen (z.B. vom Typ "Verticel" der Firma Lamort) die abgelösten Druckfarben- und Stickypartikel hinreichender Grösse (10 - 150 µm) entfernt. Die Stoffdichte wird dazu vorher mit Kreislaufwasser auf 1,0 bis 1,2 % eingestellt. In den Injektoren wird der Faserstoffsuspension Luft zugeführt. Unmittelbar nach der Luftansaugung entstehen sehr hohe Turbulenzen, die sowohl für eine gute Dispergierung der Luft in feine Bläschen als auch für den notwendigen Luftblasen-Druckfarbenpartikel-Kontakt sorgen. Die gebildeten Luftblasen-Druckfarbenpartikel-Aggregate steigen nach oben auf und bilden auf der Oberfläche einen grauen bis schwarzen Schaum aus, der (bei der Verticel-Zelle) durch eine über der Suspensionsoberfläche angebrachte Absaugung abgetrennt wird.

Im Hinblick auf die Einsetzbarkeit des aufgearbeiteten Altpapierstoffes ist neben der Entfernung der Druckfarbe auch die Abscheidung von anderen papierfremden Bestandteilen wichtig. Zur Abscheidung durchläuft der Altpapierstoff eine Cleaneranlage. Hier werden speziell schwerere Teile und Partikel mit geringem Formfaktor (z.B. grosse Druckfarbenpartikel (sog. Schmutzpunkte oder Stickies) ausgeschieden. Der Rejekt der letzten Stufe wird aus dem Prozess ausgeschieden. Nach der Stoffreinigung durch die Cleaneranlage wird die Faserstoffsuspension durch eine Dünnstoffreinigung weiter von Fremdstoffen und Stippen befreit (Fig. 3). Der Rejekt der letzten Stufe wird ebenfalls aus dem Prozess entfernt.

Zur Verbesserung der optischen Homogenität des Altpapierstoffes werden die verbleibenden optisch störenden und klebenden Verunreinigungen kalt dispergiert, d.h. durch mechanische Behandlung im Hochkonsistenzbereich ohne Zufuhr thermischer Energie unter die Sichtbarkeitsgrenze zerkleinert. Dazu wird der Stoff, der die Dünnstoffreinigung mit 0,7 % Stoffdichte verlässt, über einen Scheibenfilter und eine darauffolgende Thune-Schneckenpresse auf eine Stoffdichte von ungefähr 30 % eingedickt (Fig. 3). Das hierbei anfallende Wasser wird dem Altpapieraufbereitungsprozess wieder zugeführt.

Nach der Dispergierung wird der Altpapierstoff mit Kreislaufwasser auf 1,0 % bis 1,2 % Stoffdichte verdünnt und einer Nachflotation unterworfen. Hierzu kann eine Flotationszelle eingesetzt werden, wie sie auch in der oben beschriebenen Vorflotation verwendet wird. Schmutzpunkte und Stickypartikel, die aufgrund ihrer Grösse in der Vorflotation nicht flotiert und auch im nachfolgenden Prozess nicht ausgeschieden werden konnten, sind durch die Kalt-Dispergierung auf eine flotierbare Grösse zerkleinert worden. Neben diesen zerkleinerten Aggregaten können in der Nachflotation auch Druckfarbenpartikel, die durch die mechanische Beanspruchung im Disperger von der Faser abgelöst wurden, aus der Suspension entfernt werden. Beim Dispergierprozess darf die eingesetzte Energie nur so hoch gewählt werden, dass eine Zerkleinerung der Druckfarbenpartikel unter die untere flotierbare Grenzgrösse ausbleibt, da andernfalls der Austrag durch die Nachflotation ausbleibt. Die Kalt-Dispergierung hat in diesem Zusammenhang gegenüber einer Heiss-Dispergierung neben einer Verringerung der Installations- und Betriebskosten den Vorteil, dass eine Plastifizierung der Störstoffe und ein Aufschmelzen auf die Fasern unterbleibt, was die Flotierbarkeit dieser Partikel zur Folge hätte.

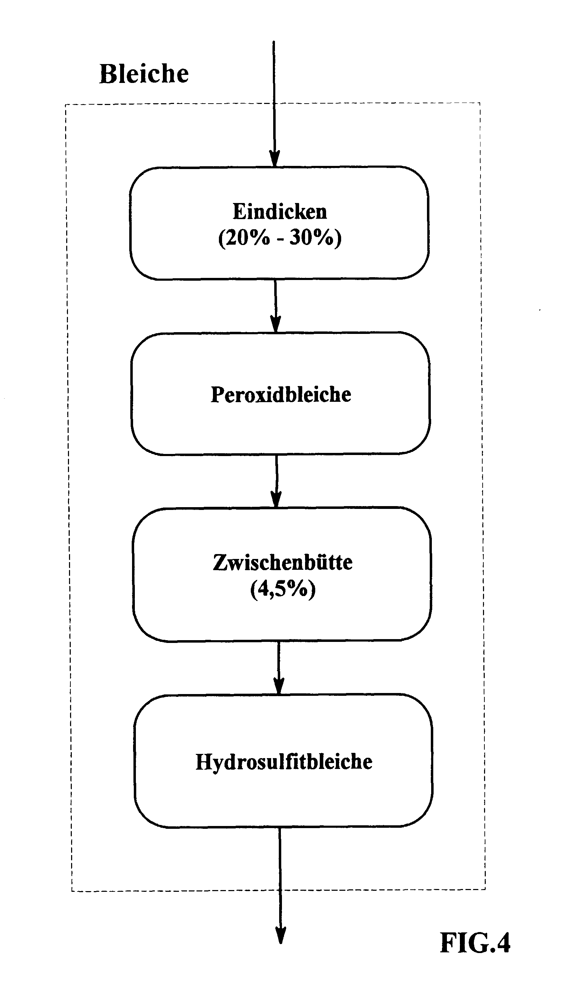

Nach der Nachflotation wird der Altpapierstoff für den nachfolgenden Bleichprozess über Eindicker und eine anschliessende Siebbandpresse auf ca. 30 % Stoffdichte eingedickt (Fig. 4). Das Filtrat wird in den Kreislauf zurückgeführt. Um einen Altpapierstoff mit hinreichendem Weissgrad zu erreichen, wird der gereinigte Stoff bei einer Stoffdichte von ca. 20 % bis 30 % mit Wasserstoffperoxid gebleicht. Dabei werden dem Stoff nach der Siebbandpresse die Bleichchemikalien zugegeben. Durch eine anschliessende Zuführung von Dampf wird der Altpapierstoff in einem Bleichmischer auf ca. 70°C - 80°C erhitzt und in einen Reaktionsturm gegeben. Die Aufenthaltszeit im Reaktionsturm beträgt max. 3 Stunden. Hierdurch kann der Altpapierstoff von ca. 57 % WP auf ca. 65 % WP aufgehellt werden. Der Peroxid-gebleichte Stoff wird anschliessend in einen Stapeltrichter überführt.

Zusätzlich zu der Peroxidbleiche kann eine weitere Reduktiv-Bleiche mit Natriumhydrosulfit zur Entfärbung vorhandener Mellierfasern und zusätzlicher Aufhellung durchgeführt werden. Der Altpapierstoff wird dazu in einer Zwischenbütte auf 4,5 % Stoffdichte verdünnt (Fig. 4) und mit den Bleichmitteln vermischt. Nach einer Aufenthaltszeit in einem Aufwärtsbleichturm von etwa 0,5 h gelangt der Altpapierstoff über eine Vorlagebütte zu der Papiermaschine.

Die Aufbereitung des Altpapiers in dem speziellen neutralen Verfahren der Erfindung hat die folgenden Vorteile:
- Durch den Wegfall diverser Deinking-Chemikalien reduzieren sich Umfang und Kosten der benötigten Installationen
- Durch die neutrale Fahrweise ergibt sich eine drastische Reduzierung der Kreislaufwasserbelastung, da weniger Faserstoffextrakte (Harzsäuren, Hemicellulosen), deren Löslichkeit durch alkalisches Milieu begünstigt wird, in Lösung gehen
- Durch die neutrale Fahrweise findet ein verstärkter selektiver Austrag von Faserfeinstoff durch die Flotation statt. Dadurch erhöht sich der Anteil der längeren Faserstoffkomponenten im Gutstoff. Dies hat wiederum zur Folge, dass die Qualität des Faserstoffes hinsichtlich Entwässerbarkeit, sowie die statische und dynamische Festigkeit verbessert werden.
- Die Gefahr der Entstehung von Stickies während der Aufbereitung wird minimiert, da viele Sticky-verursachende Substanzen, insbesondere Polyacrylate (aus dem Etikettenkleber), erst durch Einwirkung von Alkalien erhebliche Probleme durch ihre Anzahl und ihren klebrigen Charakter verursachen
- Die Gefahr der Auflösung von Störstoffen, die durch spätere Fällungsreaktionen an der Papiermaschine zur Bildung von Stickies und damit zu Produktionsstörungen führen, wird unterbunden
- Im Gegensatz zur konventionellen alkalischen Fahrweise besteht bei der Verwendung nichtionogener Tenside eine weitgehende Unabhängigkeit der Druckfarbenablösung und-flotation von der im Kreislaufwasser vorhandenen Ca²⁺-Konzentration
- Bei der Verwendung von Fettsäure im alkalischen Medium findet durch Ca²⁺ eine Fällungsreaktion zur Kalkseife statt, die zur Hydrophobierung der Druckfarbe dient. Die geringe Menge des verbleibenden ionogenen Tensids dient zur Unterstützung der Druckfarbenablösung und -dispergierung. Da keine diesbezügliche Fällung mit den Alkylalkoxylaten entsteht und kein Entstehungsprodukt zur Hydrophobierung der Druckfarbenpartikel benötigt wird, reichen bei den Alkylalkoxylaten wesentlich geringere (1/10) Einsatzmengen aus
- Da sämtliche anderen Deinking-Chemikalien nicht mehr benötigt werden, reduzieren sich die Chemikalienkosten erheblich
Insgesamt steht mit der Erfindung ein Verfahren zur Verfügung, welches die Aufbereitung von Altpapier, das in Form der problematischen Haushaltssammelware vorliegt, bei reduziertem Anlagen- und Chemikalienaufwand und erheblich geringerer Abwasserbelastung ermöglicht und gleichzeitig einen guten Weissgrad des resultierenden Faserstoffes ergibt.

## Patentansprüche

1. Verfahren zur Aufbereitung von Altpapier für die Papierproduktion, bei welchem Verfahren in einem ersten Schritt Altpapier, welches im wesentlichen aus Haushaltssammelware bzw. aus den Sorten A bis D der Liste der Deutschen Standardsorten (nach VDP) besteht, unter Zugabe von Deinking-Chemikalien (DC) aufgelöst und die Druckfarbe abgelöst und dispergiert wird, und in einem zweiten Schritt die Druckfarbenpartikel mittels Flotation aus der Altpapierstoff-Suspension entfernt werden, wobei die Auflösung und die Flotation im Neutralbereich mit einem pH-Wert zwischen 6,5 und 8,8 ohne Verwendung von Fettsäuren bzw. Seifen, vorzugsweise auch ohne Verwendung von Wasserstoffperoxid sowie alkalischen Salzen und Lösungen, durchgeführt werden, dadurch gekennzeichnet, dass die Auflösung in einem Pulper oder einer Auflösetrommel im Hochkonsistenzbereich mit einer Feststoffdichte grösser 10 % erfolgt, und dass die Deinking-Chemikalien (DC) im wesentlichen aus nichtionogenen Tensiden bestehen.

2. Verfahren nach Anspruch 1, dadurch gekennzeichnet, dass die Auflösung im Pulper mit einer Feststoffdichte von etwa 15 % erfolgt.

3. Verfahren nach einem der Ansprüche 1 und 2, dadurch gekennzeichnet, dass die Auflösung und die Flotation mit einem pH-Wert von 7,8 erfolgen.

4. Verfahren nach einem der Ansprüche 1 bis 3, dadurch gekennzeichnet, dass nichtionogene Tenside auf der Basis von Alkylalkoxylaten verwendet werden und dass die nichtionogenen Tenside mit einem Anteil von 0,03 bis 0,25 %, vorzugsweise von 0,05 bis 0,1 %, bezogen auf den Stoffeintrag in otro, zugesetzt werden.

5. Verfahren nach einem der Ansprüche 1 bis 4, dadurch gekennzeichnet, dass die Flotation aufgeteilt ist in eine Vorflotation und eine Nachflotation, und dass vor der Nachflotation zusätzlich weitere Deinking-Chemikalien in Form von nichtionogenen Tensiden zugegeben werden.

6. Verfahren nach Anspruch 5, dadurch gekennzeichnet, dass nach der Vor- und/oder Nachflotation eine Bleiche durchgeführt wird.

7. Verfahren nach Anspruch 6, dadurch gekennzeichnet, dass die Bleiche in zwei Schritten durchgeführt wird, wobei der Altpapierstoff in einem ersten Schritt einer Wasserstoffperoxid-Bleiche im Hochkonsistenzbereich mit einer Stoffdichte zwischen 20 % und 30 % und in einem zweiten Schritt einer Natriumhydrosulfit-Bleiche im Niederkonsistenzbereich mit einer Stoffdichte von etwa 4,5 % unterzogen wird.

8. Verfahren nach einem der Ansprüche 1 bis 7, dadurch gekennzeichnet, dass der Altpapierstoff zwischen der Auflösung und der Flotation zunächst auf eine Stoffdichte von etwa 3,5 % verdünnt, nachfolgend der Schwerschmutz durch Schleudern abgetrennt und schliesslich der Altpapierstoff einer mehrstufigen Grobsortierung unterworfen wird.

9. Verfahren nach Anspruch 5, dadurch gekennzeichnet, dass zwischen der Vorflotation und der Nachflotation zunächst eine mehrstufige Feinsortierung in einem Konsistenzbereich mit einer Stoffdichte von weniger als 1 % durchgeführt wird, dass der Altpapierstoff anschliessend auf eine Stoffdichte von etwa 30 % eingedickt und dispergiert wird, und nach der Dispergierung zur Nachflotation wieder auf eine Stoffdichte von etwa 1 % verdünnt wird.

10. Verfahren nach Anspruch 9, dadurch gekennzeichnet, dass die Dispergierung kalt, d.h., ohne Zufuhr thermischer Energie, durchgeführt wird.

## Claims

1. Process for the recovery of waste paper for paper production, in which in a first stage waste paper, which essentially comprises miscellaneous domestic products or grades A to D of the German Standard Grades List (according to the German Paper Industry Association), is repulped accompanied by the addition of deinking chemicals and the printing ink is dissolved and dispersed, and in a second stage the printing ink particles are removed from the waste paper stock suspension by floatation, the repulping and floatation being performed in the neutral range with a pH-value between 6.5 and 8.8 without using fatty acids or soaps, preferably also without using hydrogen peroxide and alkaline salts and solutions, characterized in that repulping takes place in a pulper or a repulping drum in the high consistency range with a true density higher than 10% and that the deinking chemicals substantially comprise nonionic surfactants.

2. Process according to claim 1, characterized in that repulping takes place in the pulper with a true density of approximately 15%.

3. Process according to one of the claims 1 and 2, characterized in that repulping and floatation take place with a pH-value of 7.8.

4. Process according to one of the claims 1 to 3, characterized in that nonionic surfactants based on alkyl alkoxylates are used and that the nonionic surfactants are added in a proportion of 0.03 to 0.25%, preferably 0.05 to 0.1%, based on the in otro furnish.

5. Process according to one of the claims 1 to 4, characterized in that floatation is subdivided into a first and a second stage floatation and that prior to second stage floatation additionally further deinking chemicals are added in the form of nonionic surfactants.

6. Process according to claim 5, characterized in that following first and/or second stage floatation bleaching is carried out.

7. Process according to claim 6, characterized in that bleaching is performed in two stages, the waste paper stock undergoing in a first stage hydrogen peroxide bleaching in the high consistency range with a true density between 20 and 30% and in a second stage a sodium hydrosulphite bleaching in the low consistency range with a true density of approximately 4.5%.

8. Process according to one of the claims 1 to 7, characterized in that between repulping and floatation the waste paper stock is initially diluted to a stock density of approximately 3.5%, then the heavy dirt is separated by centrifuging and finally the waste paper stock undergoes a multistage coarse screening.

9. Process according to claim 5, characterized in that between first and second stage floatation there is initially a multistage fine screening in a consistency range with a stock density of less than 1%, that the waste paper stock is then deckered and dispersed to a stock density of approximately 30% and following dispersion for second stage floatation dilution again takes place to a stock density of approximately 1%.

10. Process according to claim 9, characterized in that dispersion is performed cold, i.e. without the supply of thermal energy.

## Revendications

1. Procédé de recyclage de vieux papiers destinés à la fabrication de papier, avec une première étape consistant à désintégrer des vieux papiers, lesquels comprennent essentiellement des produits de récupération ménagère ou entrant dans les catégories A à D de la liste des catégories standard allemandes (conformément à la VDP), additionnés d'agents chimiques de désencrage (DC) et à décrocher puis disperser l'encre d'imprimerie et une seconde étape consistant à éliminer par flottation les particules d'encre d'imprimerie de cette pâte de vieux papiers en suspension, la désintégration et la flottation se déroulant dans un milieu neutre avec un pH compris entre 6,5 et 8,8, sans utilisation d'acides gras ou de savons, de préférence également en l'absence de peroxyde d'hydrogène ainsi que de sels et solutions alcalins, caractérisé en ce que la désintégration se déroule dans un pulpeur ou un tambour de désintégration en milieu de haute consistance avec une concentration supérieure à 10% et en ce que les agents chimiques de désencrage (DC) se composent essentiellement d'agents de surface non ioniques.

2. Procédé selon la revendication 1 caractérisé en ce que la désintégration se déroule dans un pulpeur à une concentration de matières solides d'environ 15%.

3. Procédé selon l'une des revendications 1 et 2 caractérisé en ce que la désintégration et la flottation se déroulent à un pH égal à 7,8.

4. Procédé selon l'une des revendications 1 à 3 caractérisé en ce qu'on emploie des agents de surface non ioniques à base d'alkylalcoxylates et en ce qu'on ajoute ces agents de surface non ioniques dans une proportion comprise entre 0,03 % et 0,25 %, de préférence entre 0,05 % et 0,1 %, rapportée à la composition de fabrication desséchée à l'étuve.

5. Procédé selon l'une des revendications 1 à 4 caractérisé en ce que la flottation est divisée en pré-flottation et post-flottation et en ce que, préalablement à la post-flottation, on introduit à nouveau des agents chimiques de désencrage sous la forme d'agents de surface non ioniques.

6. Procédé selon la revendication 5 caractérisé en ce qu'on procède à un blanchiment après la pré-flottation et/ou la post-flottation.

7. Procédé selon la revendication 6 caractérisé en ce que le blanchiment se déroule en deux étapes, la pâte de vieux papiers désintégrés étant dans un premier temps soumis à un blanchiment au peroxyde d'hydrogène dans un milieu à haute consistance avec une concentration comprise entre 20 % et 30 % et dans un second temps, à un blanchiment à l'hydrosulfite de sodium dans un milieu à faible consistance avec une concentration d'environ 4,5 %.

8. Procédé selon l'une des revendications 1 à 7 caractérisé en ce qu'entre la désintégration et la flottation, on dilue dans un premier temps la pâte de vieux papiers jusqu'à une concentration d'environ 3,5 %, on procède ensuite à une centrifugation pour récupérer les détritus lourds et on soumet enfin la pâte de vieux papiers à un tri grossier en plusieurs stades.

9. Procédé selon la revendication 5 caractérisé en ce qu'entre la pré-flottation et la post-flottation, on procède tout d'abord à un tri fin en plusieurs stades dans un milieu de consistance de concentration inférieure à 1 %, en ce qu'ensuite, on épaissit et disperse la pâte de vieux papiers jusqu'à une concentration d'environ 30 % et qu'après la dispersion en vue de la post-flottation, on la dilue à nouveau pour obtenir une concentration d'environ 1 %.

10. Procédé selon la revendication 9 caractérisé en ce que la dispersion est réalisée à froid, c'est à dire sans apport d'énergie thermique.
